# EUROPÄISCHE PATENTSCHRIFT

(11) **EP 3 550 151 B1**
(45) Veröffentlichungstag und Bekanntmachung des Hinweises auf die Patenterteilung: **14.09.2022**
(21) Anmeldenummer: 19166497.8
(22) Anmeldetag: 01.04.2019
(51) Int. Cl.: F04D 23/00, F04D 29/66

(54) **VERBRENNUNGSLUFTGEBLÄSE**
COMBUSTION AIR FAN
VENTILATEUR À AIR DE COMBUSTION

(30) Priorität: 04.04.2018 DE 102018107953
(43) Veröffentlichungstag der Anmeldung: 09.10.2019
(73) Patentinhaber: Eberspächer Climate Control Systems GmbH, 73730 Esslingen (DE)
(72) Erfinder: Humburg, Michael, 73035 Göppingen (DE); Eppler, Hermann, 72336 Balingen (DE)
(74) Vertreter: Ruttensperger Lachnit Trossin Gomoll

(56) Entgegenhaltungen:
- DE-A1- 4 029 041
- DE-A1-102016 109 994
- DE-B3-102012 213 598
- US-A- 3 360 193

## Beschreibung

Die vorliegende Erfindung betrifft ein Verbrennungsluftgebläse, insbesondere ein als Seitenkanalgebläse aufgebautes Verbrennungsluftgebläse, gemäß dem Oberbegriff des Anspruchs 1, das in einem brennstoffbetriebenen Fahrzeugheizgerät dazu genutzt werden kann, die für die Verbrennung erforderliche Luft in Richtung zu einer Brennkammer zu fördern.

Ein derartiges Verbrennungsluftgebläse umfasst ein im Allgemeinen aus Metallmaterial aufgebautes Gebläsegehäuse, wobei in dem Gebläsegehäuse ein von zu fördernder Verbrennungsluft durchströmbarer Luftströmungsraum gebildet ist und über wenigstens eine Eintrittsöffnung in den Luftströmungsraum strömende Luft zu einem ein um eine Drehachse drehbares Förderrad umfassenden Förderbereich strömt. Das Förderrad ist durch einen an dem Gebläsegehäuse getragenen Gehäusedeckel überdeckt. Das Gebläsegehäuse umfasst eine Bodenwand, und der Förderbereich umfasst in der Bodenwand des Gebläsegehäuses einen zu einer vom Luftströmungsraum abgewandten Außenseite offenen, die Drehachse ringartig umgebenden und von dem Förderrad überdeckten Förderkanal. Der von der Bodenwand und einer Umfangswand umgrenzte Luftströmungsraum ist über wenigstens eine Austrittsöffnung zu dem Förderkanal offen.

Aus der DE 40 29 041 A1 ist ein Verbrennungsluftgebläse gemäß dem Oberbegriff des Anspruchs 1 bekannt, bei welchem die den Luftströmungsraum umgebende Umfangswand vollständig an dem die Bodenwand mit dem darin ausgebildeten Förderkanal bereitstellenden Gebläsegehäuse ausgebildet ist.

Es ist die Aufgabe der vorliegenden Erfindung, ein Verbrennungsluftgebläse, insbesondere Seitenkanalgebläse, für ein brennstoffbetriebenes Fahrzeugheizgerät mit verringertem Gewicht bereitzustellen.

Erfindungsgemäß wird diese Aufgabe gelöst durch ein Verbrennungsluftgebläse, insbesondere Seitenkanalgebläse, für ein brennstoffbetriebenes Fahrzeugheizgerät, umfassend ein Gebläsegehäuse, wobei an dem Gebläsegehäuse ein von zu fördernder Verbrennungsluft durchströmbarer Luftströmungsraum gebildet ist und über wenigstens eine Eintrittsöffnung in den Luftströmungsraum strömende Luft zu einem ein um eine Drehachse drehbares Förderrad umfassenden Förderbereich strömt, wobei das Gebläsegehäuse eine Bodenwand umfasst und der Förderbereich in der Bodenwand des Gebläsegehäuses einen zu einer vom Luftströmungsraum abgewandten Außenseite offenen, die Drehachse ringartig umgebenden und von dem Förderrad überdeckten Förderkanal umfasst, wobei der Luftströmungsraum über wenigstens eine Austrittsöffnung zu dem Förderkanal offen ist, wobei an dem Gebläsegehäuse ein das Förderrad überdeckender und mit dem Gebläsegehäuse einen Förderradaufnahmeraum begrenzender Gehäusedeckel getragen ist, ferner umfassend eine den Luftströmungsraum umgebende Umfangswand, wobei wenigstens ein Teil der Umfangswand an dem Gehäusedeckel ausgebildet ist.

Das Bereitstellen zumindest eines Teils der Umfangswand an dem Gehäusedeckel ermöglicht es, diesen Teil der Umfangswand mit dem Material des Gehäusedeckels, im Allgemeinen Kunststoffmaterial, aufzubauen, während insbesondere der die Bodenwand bereitstellende Bereich, also im wesentlichen das Gebläsegehäuse gegebenenfalls mit einem weiteren Teil der Umfangswand, beispielsweise aus Metallmaterial aufgebaut werden kann und somit die insbesondere im Bereich des Förderkanals erforderliche, hochpräzise Fertigung ermöglicht.

Beispielsweise kann vorgesehen sein, dass ein erster Teil der Umfangswand an dem Gebläsegehäuse ausgebildet ist und ein zweiter Teil der Umfangswand an dem Gehäusedeckel ausgebildet ist. Somit wird es möglich, beispielsweise den Teil der Umfangswand, an welchem ein Brennerbereich eines Fahrzeugheizgeräts anzubringen ist, mit mechanisch und thermisch stabilerem Material, also beispielsweise Metallmaterial, aufzubauen.

Die Umfangswand kann beispielsweise eine im Wesentlichen rechteckige mit vier Teil-Umfangswänden bereitgestellte Querschnittsgeometrie aufweist, und an dem Gebläsegehäuse kann eine der Teil-Umfangswände vorgesehen sein, während an dem Gehäusedeckel drei der Teil-Umfangswände vorgesehen sein können.

Zur Zufuhr von Verbrennungsluft in den Luftströmungsraum wird vorgeschlagen, dass an dem ersten Teil der Umfangswand ein zu dem Luftströmungsraum führender und über die wenigstens eine Eintrittsöffnung zu diesem offener Luftzuführkanal vorgesehen ist.

Ferner kann für einen kompakten, eine geringe Anzahl an Bauteilen erfordernden Aufbau das Gebläsegehäuse einen wenigstens bereichsweise von dem Luftströmungsraum umgebenen Motorgehäusebereich mit einer Umfangswand und einer Bodenwand aufweisen.

Zum Abschluss des Luftströmungsraum an der von der Bodenwand entfernten Seite der Umfangswand wird vorgeschlagen, dass an einem von der Bodenwand des Gebläsegehäuses abgewandten Endbereich der Umfangswand ein den Luftströmungsraum abschließendes Abschlusselement vorgesehen ist, und dass das Abschlusselement mit Kunststoffmaterial aufgebaut ist.

Um Luftleckagen und auch den Austritt von gasförmigem Kohlenwasserstoff zu vermeiden, kann zwischen dem Gehäusedeckel und der Bodenwand des Gebläsegehäuses ein den Förderradaufnahmeraum im Bereich der Angrenzung des Gehäusedeckels an die Bodenwand dicht abschließendes Dichtelement angeordnet sein.

Beispielsweise kann das Dichtelement den Förderkanal ringartig umgebend an einer Außenseite der Bodenwand des Gebläsegehäuses angeordnet sein.

Um eine weiter erhöhte Sicherheit gegen den Austritt von gasförmigem Kohlenwasserstoff bereitzustellen, wird vorgeschlagen, dass in dem Luftströmungsraum wenigstens ein Kohlenwasserstoffspeicherelement angeordnet ist. Beispielsweise kann wenigstens ein Kohlenwasserstoffspeicherelement mit aktivkohlehaltigem Material aufgebaut sein.

Wie bereits voranstehend ausgeführt, kann aus Stabilitätsgründen und aus Gründen der präzisen Fertigung das Gebläsegehäuse mit Metallmaterial, vorzugsweise Aluminium oder einer Aluminiumlegierung, aufgebaut sein, während der Gehäusedeckel aus Gründen des geringeren Gewichts mit Kunststoffmaterial, vorzugsweise Polyamidmaterial, aufgebaut sein kann.

Dabei kann beispielsweise das Gebläsegehäuse in einem Metall-Druckgussverfahren hergestellt sein. Der Gehäusedeckel kann in einem Kunststoff-Spritzgussverfahren, vorzugsweise einem MuCell^{®}-Spritzgussverfahren, hergestellt sein.

Die Erfindung betrifft ferner ein brennstoffbetriebenes Fahrzeugheizgerät, umfassend einen Brennerbereich, eine flüssigen Brennstoff zu dem Brennerbereich fördernde Brennstoffpumpe sowie ein erfindungsgemäß aufgebautes Verbrennungsluftgebläse.

Dabei ist vorzugsweise vorgesehen, dass der Brennerbereich an dem ersten Teil der Umfangswand getragen ist.

Die vorliegende Erfindung wird nachfolgend mit Bezug auf die beiliegenden Figuren detailliert beschrieben. Es zeigt:
- Fig. 1: eine prinzipielle Darstellung eines brennstoffbetriebenen Fahrzeugheizgeräts mit einem Verbrennungsluftgebläse;
- Fig. 2: ein gemäß den Prinzipien der vorliegenden Erfindung aufgebautes Verbrennungsluftgebläse in perspektivischer Explosionsdarstellung.

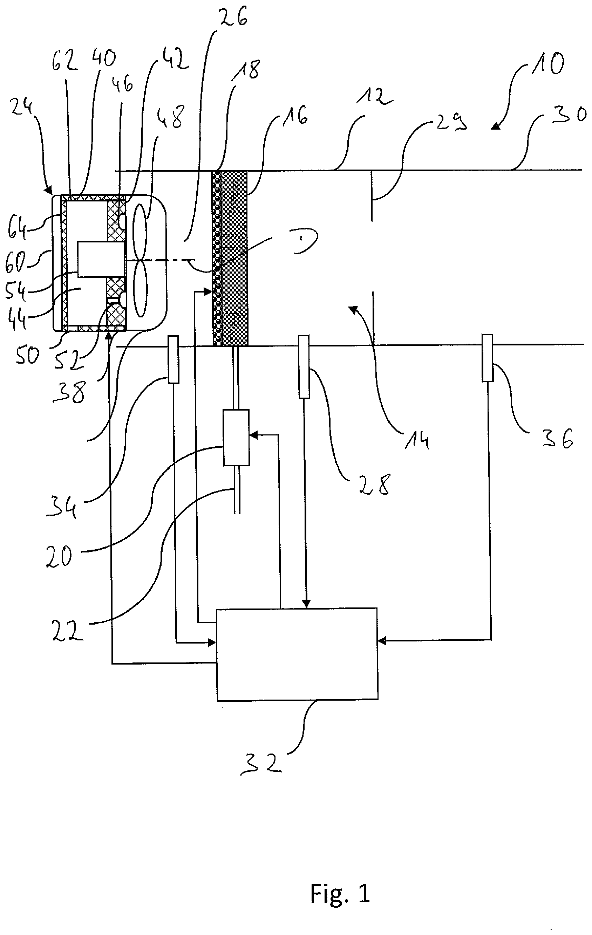

Die Fig. 1 zeigt in prinzipieller Darstellung den Aufbau eines allgemein mit 10 bezeichneten brennstoffbetriebenen Fahrzeugheizgeräts. Das Fahrzeugheizgerät 10 umfasst einen Brennerbereich 12 mit einer in einem Brennkammergehäuse ausgebildeten Brennkammer 14. An einem die Brennkammer 14 begrenzenden Bodenbereich ist bei Aufbau des Brennerbereichs 12 als Verdampferbrenner ein poröses Verdampfermedium 16 vorgesehen, welches beispielsweise als Metallgeflecht, Metallgewirk, Schaumkeramik oder dergleichen ausgebildet sein kann. Zur Abstützung der Brennstoffverdampfung kann dem porösen Verdampfermedium 16 eine elektrisch erregbare Heizeinrichtung 18 zugeordnet sein.

Der für die Verbrennung erforderliche Brennstoff wird vermittels einer Brennstoffpumpe 20, beispielsweise Dosierpumpe, über eine Brennstoffleitung 22 in das poröse Verdampfermedium 16 eingeleitet. Der flüssige Brennstoff verteilt sich in dem Verdampfermedium 16 durch Kapillarförderwirkung und wird als Brennstoffdampf, also in gasförmigem Aggregatzustand, in die Brennkammer 14 abgegeben.

Die für die Verbrennung erforderliche Verbrennungsluft wird durch ein allgemein mit 24 bezeichnetes Verbrennungsluftgebläse zur Brennkammer 14 gefördert. Die von dem Verbrennungsluftgebläse 24 abgegebene Verbrennungsluft gelangt in einen allgemein als Plenum bezeichneten Raum 26 stromaufwärts der Brennkammer 14 und tritt über mehrere beispielsweise in einer die Brennkammer 14 begrenzenden Umfangswandung oder/und einem an dem Bodenbereich vorgesehenen Lufteinleitstutzen in die Brennkammer 14 ein. Das in der Brennkammer 14 gebildete Gemisch aus Verbrennungsluft und Brennstoff wird beispielsweise durch ein elektrisch erregbares Zündorgan 28, beispielsweise Glühstift, gezündet. Die bei der Verbrennung entstehenden Abgase verlassen die Brennkammer 14 über eine Flammblende 29 und strömen entlang eines Flammrohrs 30 in Richtung auf einen nicht dargestellten Wärmetauscherbereich zu.

Das Fahrzeugheizgerät 10 weist ferner eine allgemein mit 32 bezeichnete Ansteueranordnung auf. Diese steuert den Betrieb der Brennstoffpumpe 20 und des Verbrennungsluftgebläses 24 sowie auch der elektrisch erregbaren Heizeinrichtung 18. Hierzu können der Ansteueranordnung 32 von verschiedenen Sensoren, wie z. B. einem Drucksensor 34 und einem Temperatursensor 36, für den Betrieb des Fahrzeugheizgeräts 10 relevante Informationen zugeführt werden.

Es ist darauf hinzuweisen, dass der grundsätzliche Aufbau des Fahrzeugheizgeräts 10 vorangehend anhand eines Beispiels dargestellt wurde und in verschiedensten Aspekten von den dargestellten und vorangehend beschriebenem Aufbau abweichen kann.

Das Verbrennungsluftgebläse 24 ist bei einem derartigen brennstoffbetriebenen Fahrzeugheizgerät 10 allgemein als so genanntes Seitenkanalgebläse aufgebaut. Es umfasst ein Gebläsegehäuse 38 mit einer Bodenwand 42, die zusammen mit einer Umfangswand 40 einen Luftströmungsraum 44 begrenzt. Über den Luftströmungsraum 44 gelangt die in Richtung Brennkammer 14 zu fördernde Verbrennungsluft zu einem in der Bodenwand 42 ausgebildeten, ringförmigen Förderkanal 46. Dieser ist an einer vom Luftströmungsraum 44 abgewandten Außenseite der Bodenwand 42 von einem nur prinzipiell dargestellten, um eine Drehachse D drehbaren Förderrad 48 überdeckt. Im Förderbetrieb tritt die durch die Förderwirkung des rotierenden Förderrads 48 entlang des Förderkanals 46 geförderte Luft in den Raum 26 und über diesen in die Brennkammer 14 ein.

Über eine Eintrittsöffnung 50 gelangten die zum Brennerbereich 12 zu fördernde Luft in den Luftströmungsraum 44. Über eine Austrittsöffnung 52 verlässt die Luft den die Drehachse D umgebenden Luftströmungsraum 44 und tritt in den Förderkanal 46 ein. Der Luftströmungsraum 44 liegt somit stromaufwärts bezüglich des Förderkanals 46.

Zur Aufnahme eines das Förderrad 48 antreibenden Gebläsemotors, welcher im allgemeinen als Elektromotor ausgebildet ist, ist an dem Gebläsegehäuse 38 ein Motorgehäusebereich 54 vorgesehen. Dieser umfasst eine Umfangswand sowie eine an dem von der Bodenwand 42 des Gebläsegehäuses 38 abgewandten Ende der Umfangswand vorgesehene Bodenwand. Es ist darauf hinzuweisen, dass die Umfangswand des Motorgehäusebereichs zusammen mit der Bodenwand 42 und wie nachfolgend erläutert, einem Teil der Umfangswand 40 des Gebläsegehäuses 38 als ein integrales Bauteil, insbesondere Metallgussteil, beispielsweise aus Aluminium oder einer Aluminiumlegierung ausgebildet sein kann. Die Bodenwand des Motorgehäusebereichs kann nach Einsetzen des Gebläsemotors in den von der Umfangswand des Motorgehäusebereichs 54 umgebenden Volumenbereich am axialen Ende, axial bezogen auf eine Drehachse einer Rotorwelle des Gebläsemotors bzw. die Drehachse D des Förderrads 48, der Umfangswandung des Motorgehäusebereichs beispielsweise durch Verschraubung, Verrastung oder dergleichen festgelegt werden.

Um den Luftströmungsraum 44 auch an dem von der Bodenwand 42 abgewandten Endbereich der Umfangswand 40 des Gebläsegehäuses 38 abzuschließen, ist ein allgemein mit 60 bezeichnetes Abschlusselement vorgesehen. Dieses kann über eine Mehrzahl von Rastlaschen an entsprechenden Rastvorsprüngen an der Umfangswand 40 verrastet werden. Am Abschlusselement 60 kann die Ansteueranordnung 32 oder zumindest ein Teil derselben, z. B. der der Ansteuerung des Gebläsemotors dienende Teil, vorgesehen sein, wobei beispielsweise über einen in den Luftströmungsraum 44 eingreifenden Steckbereich eine elektrische Verbindung zu dem Gebläsemotor hergestellt werden kann.

Bei deaktiviertem Fahrzeugheizgerät 10 und in dem porösen Verdampfermedium 16 noch gespeichertem, flüssigem Brennstoff, also Kohlenwasserstoff, besteht grundsätzlich die Möglichkeit, dass, beispielsweise durch die noch vorhandene Restwärme unterstützt, Brennstoff abdampft und über den an sich zur Einleitung von Verbrennungsluft in die Brennkammer 14 vorgesehenen Strömungsweg in das Verbrennungsluftgebläse 24 und somit insbesondere auch den Bereich des Luftströmungsraums 44 gelangt. Derartiger in gasförmigem Aggregatzustand dann vorliegender Brennstoff bzw. Kohlenwasserstoff könnte über den Lufteinleitstutzen 52 zur Umgebung hin austreten. Um dies zu verhindern, können im Luftströmungsraum, beispielsweise anliegend an der Umfangswand 40, der Bodenwand 42 bzw. dem Abschlusselement 60 Kohlenwasserstoffspeicherelemente 62, 64 vorgesehen sein. Diese können mit aktivkohlehaltigem Material aufgebaut sein und können beispielsweise als ein oder mehrere Materialblöcke im Luftströmungsraum 44 aufgenommen sein.

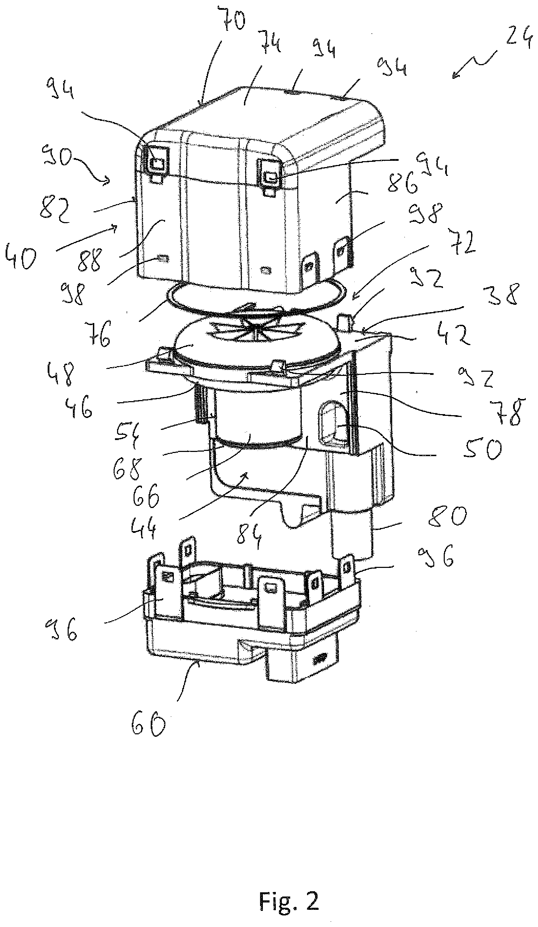

Der Aufbau des Verbrennungsluftgebläses 24 wird nachfolgend mit Bezug auf die Fig. 2 detailliert beschrieben.

Die Fig. 2 zeigt das Verbrennungsluftgebläse 24 in Explosionsdarstellung. Einen zentralen Bestandteil bildet das Gebläsegehäuse 38 mit der daran als integraler Bestandteil vorgesehenen Bodenwand 42. Diese bzw. der darin ausgebildete Förderkanal 46 ist vom Förderrad 48 überdeckt. An der zum Luftströmungsraum 42 orientierten Seite der Bodenwand 42 ist der Motorgehäusebereich 54 mit seiner Umfangswand 66 und einer daran anzubringenden Bodenwand 68 vorgesehen. Zumindest die Umfangswand 66 kann ebenfalls einen integralen Bestandteil des Gebläsegehäuses 38 bilden.

Zu erkennen ist in Fig. 2 auch ein allgemein mit 70 bezeichneter Gehäusedeckel. Dieser überdeckt einen Förderbereich 72 des Verbrennungsluftgebläses 24. Der Förderbereich 72 umfasst im Wesentlichen das Förderrad 48 und den davon überdeckten Förderkanal 46. Der Gehäusedeckel 70 stellt einen Haubenbereich 74 bereit, der im Wesentlichen die Bodenwand 42 überdeckt und den Förderbereich 72 abschließt. Um hier einen gasdichten Abschluss zu erreichen, kann ein ringartiges Dichtelement 76 das Förderrad 48 bzw. den Förderkanal 46 umgebend zwischen der Bodenwand 42 und dem Gehäusedeckel 70 positioniert werden.

Die vorangehend mit Bezug auf die Fig. 1 bereits in prinzipieller Weise angesprochene Umfangswand 40, welche zusammen mit der Bodenwand 42 und dem Abschlusselement 60 den Luftströmungsraum 44 umgrenzt, umfasst im dargestellten Ausgestaltungsbeispiel zwei Teile. Ein erster Teil 78 der die Drehachse D umgebenden bzw. sich in Richtung der Drehachse D erstreckenden Umfangswand 40 bildet einen integralen Bestandteil des Gebläsegehäuses 48 und erstreckt sich von der Bodenwand 42 an der vom Förderrad 48 abgewandten Seite derselben. An diesem ersten Teil 78 der Umfangswand 40 ist ein Luftzuführkanal 80 gebildet, welcher über die Eintrittsöffnung 50 zum Luftströmungsraum 44 offen ist.

An dem Gehäusedeckel 70 ist ein zweiter Teil 82 der Umfangswand 40 gebildet. Dieser zweite Teil 82 umgibt zusammen mit dem ersten Teil 80 den Luftströmungsraum 44 in Umfangsrichtung vollständig.

Bei der in Fig. 2 dargestellten Ausgestaltung, bei welcher die Umfangswand 40 eine im Wesentlichen rechteckige, beispielsweise quadratische, Querschnittsgeometrie aufweist, ist die Umfangswand 40 mit insgesamt vier Teil-Umfangswänden 84, 86, 88, 90 bereitgestellt. Die Teil-Umfangswand 44 stellt im Wesentlichen den ersten Teil 78 der Umfangswand 40 bereit und bildet somit einen integralen Bestandteil des Gebläsegehäuses 38. Die Teil-Umfangswände 86, 88, 90 stellen im Wesentlichen den zweiten Teil 82 der Umfangswand 40 bereit und bilden zusammen mit dem Haubenbereich 74 einen integralen Bestandteil des Gehäusedeckels 70.

Der Gehäusedeckel 70 kann beispielsweise dadurch am Gebläsegehäuse 38 angebracht werden, dass am Gebläsegehäuse 38 integral angeformte Rastorgane 92 in zugehörige Rastöffnungen 94 am Gehäusedeckel 70 eingreifend positioniert werden und somit durch Formschluss den Verbund zwischen Gehäusedeckel 70 und Gebläsegehäuse 38 beibehalten. In diesem Zustand schließen dann die Teil-Umfangswände 86, 90 an die Teil-Umfangswand 84 an. Um hier einen im Wesentlichen gasdichten Anschluss zu erreichen, können im ersten Teil 78 der Umfangswand 40 nutartige Aussparungen vorgesehen sein, in welche Umfangsrandbereiche der Teil-Umfangswände 86, 90 eingreifend positioniert werden. Nach Anbringung des Gehäusedeckels 70 am Gebläsegehäuse 38 kann dann das Abschlusselement 60 montiert werden. Dieses weist die bereits angesprochenen Rastlaschen 96 auf, in welche am zweiten Teil 82 der Umfangswand 40 vorgesehene Rastvorsprünge 98 eingreifend positioniert werden können, um auch somit einen durch Formschluss generierten festen Zusammenhalt zu gewährleisten. Es ist darauf hinzuweisen, dass beispielsweise vor dem Anbringen des Abschlusselements 60 ein oder mehrere Kohlenwasserstoffspeicherelemente im Inneren des Luftströmungsraums 44 positioniert werden können.

Mit dem erfindungsgemäßen Aufbau eines Verbrennungsluftgebläses und dem Vorsehen wenigstens eines Teils der Umfangswand 40 am Gehäusedeckel 70 wird es möglich, eine deutliche Gewichtseinsparung zu erreichen, da ein wesentlicher Teil der Umfangswand 40 nicht mehr aus dem schwereren Aufbaumaterial des Gebläsegehäuses 38, also nicht mehr mit Metallmaterial aufgebaut ist, sondern mit dem leichteren Aufbaumaterial des Gehäusedeckels 70, also einem Kunststoffmaterial. Als besonders geeignetes Kunststoffmaterial kann Polyamidmaterial, wie z. B. PA6 GF30, eingesetzt werden, also ein Polyamidmaterial, das mit einem Glasfaseranteil von 30 % verstärkt ist. Ein entsprechendes Aufbaumaterial kann auch für das Abschlusselement 60 verwendet werden. Der Gehäusedeckel 70 bzw. das Abschlusselement 60 können dabei in einem Spritzgussverfahren hergestellt werden. Als besonders vorteilhaft kann hier das MuCell^{®}-Verfahren verwendet werden, bei welchem aufgrund des Bildens eines mikrozellularen Kerns eine sehr gute akustische Dämpfung erreicht werden kann. Das Gebläsegehäuse 38 wird in einem Druckgussverfahren aus Metallmaterial, wie z. B. Aluminium oder einer Aluminiumlegierung, aufgebaut. Dabei ist vorzugsweise vorgesehen, dass an dem ersten Teil 78 der Umfangswand 40, also der Teil-Umfangswand 84, an der vom Luftströmungsrand 44 abgewandten Außenseite der Brennerbereich 12 des in Fig. 2 in prinzipieller Art und Weise dargestellten Fahrzeugheizgeräts 10 angeordnet bzw. angebracht wird. Somit ist dieser zu einer stärkeren thermischen und mechanischen Belastung führende Brennerbereich über ein diesbezüglich weniger empfindliches Bauteil aus Metallmaterial an das Verbrennungsluftgebläse 24 angebunden.

Es sei abschließend darauf hingewiesen, dass das vorangehend beschriebene Verbrennungsluftgebläse insbesondere hinsichtlich der Ausgestaltung der Umfangswand selbstverständlich variiert werden kann. So könnte beispielsweise die gesamte Umfangswand am Gehäusedeckel 74 und somit aus Kunststoffmaterial bereitgestellt sein. Das Gebläsegehäuse würde dann im Wesentlichen noch die in den Gehäusedeckel einzusetzende Bodenwand und den daran vorgesehenen Motorgehäusebereich umfassen. Bei einer weiteren alternativen Ausgestaltungsart könnte beispielsweise ein Teil der Teil-Umfangswände 86, 90 des zweiten Teils der Umfangswand 40 sich vom ersten Teil 78, also der Teil-Umfangswand 84 erstreckend und somit als Bestandteil des Gebläsegehäuses 38 bereitgestellt sein.

## Patentansprüche

1. Verbrennungsluftgebläse, insbesondere Seitenkanalgebläse, für ein brennstoffbetriebenes Fahrzeugheizgerät, umfassend ein Gebläsegehäuse (38), wobei an dem Gebläsegehäuse (38) ein von zu fördernder Verbrennungsluft durchströmbarer Luftströmungsraum (44) gebildet ist und über wenigstens eine Eintrittsöffnung (50) in den Luftströmungsraum (44) strömende Luft zu einem ein um eine Drehachse (D) drehbares Förderrad (48) umfassenden Förderbereich (72) strömt, wobei das Gebläsegehäuse (38) eine Bodenwand (42) umfasst und der Förderbereich (72) in der Bodenwand (42) des Gebläsegehäuses (38) einen zu einer vom Luftströmungsraum (44) abgewandten Außenseite offenen, die Drehachse ringartig umgebenden und von dem Förderrad (48) überdeckten Förderkanal (46) umfasst, wobei der Luftströmungsraum (44) über wenigstens eine Austrittsöffnung (52) zu dem Förderkanal (46) offen ist, wobei an dem Gebläsegehäuse (38) ein das Förderrad (48) überdeckender und mit dem Gebläsegehäuse (38) einen Förderradaufnahmeraum begrenzender Gehäusedeckel (70) getragen ist, ferner umfassend eine den Luftströmungsraum (44) umgebende Umfangswand (40), **dadurch gekennzeichnet, dass** wenigstens ein Teil der Umfangswand (40) an dem Gehäusedeckel (70) ausgebildet ist.

2. Verbrennungsluftgebläse nach Anspruch 1, **dadurch gekennzeichnet, dass** ein erster Teil (78) der Umfangswand (40) an dem Gebläsegehäuse (38) ausgebildet ist und ein zweiter Teil (82) der Umfangswand (40) an dem Gehäusedeckel (70) ausgebildet ist.

3. Verbrennungsluftgebläse nach einem der vorangehenden Ansprüche, **dadurch gekennzeichnet, dass** die Umfangswand (40) eine im Wesentlichen rechteckige mit vier Teil-Umfangswänden (84, 86, 88, 90) bereitgestellte Querschnittsgeometrie aufweist, und dass an dem Gebläsegehäuse (38) eine der Teil-Umfangswände (84, 86, 88, 90) vorgesehen ist und an dem Gehäusedeckel (70) drei der Teil-Umfangswände (84, 86, 88, 90) vorgesehen sind.

4. Verbrennungsluftgebläse nach einem der vorangehenden Ansprüche, **dadurch gekennzeichnet, dass** in dem ersten Teil (78) der Umfangswand (40) ein zu dem Luftströmungsraum (44) führender und über die wenigstens eine Eintrittsöffnung (50) zu diesem offener Luftzuführkanal (80) vorgesehen ist.

5. Verbrennungsluftgebläse nach einem der vorangehenden Ansprüche, **dadurch gekennzeichnet, dass** das Gebläsegehäuse (38) einen wenigstens bereichsweise von dem Luftströmungsraum (44) umgebenen Motorgehäusebereich (54) mit einer Umfangswand (66) und einer Bodenwand (68) aufweist.

6. Verbrennungsluftgebläse nach einem der vorangehenden Ansprüche, **dadurch gekennzeichnet, dass** an einem von der Bodenwand (42) des Gebläsegehäuses (38) abgewandten Endbereich der Umfangswand (40) ein den Luftströmungsraum (44) abschließendes Abschlusselement (60) vorgesehen ist, und dass das Abschlusselement (60) mit Kunststoffmaterial aufgebaut ist.

7. Verbrennungsluftgebläse nach einem der vorangehenden Ansprüche, **dadurch gekennzeichnet, dass** zwischen dem Gehäusedeckel (70) und der Bodenwand (42) des Gebläsegehäuses (38) ein den Förderradaufnahmeraum im Bereich der Angrenzung des Gehäusedeckels (70) an die Bodenwand (42) dicht abschließendes Dichtelement (76) angeordnet ist.

8. Verbrennungsluftgebläse nach Anspruch 7, **dadurch gekennzeichnet, dass** das Dichtelement (76) den Förderkanal (46) ringartig umgebend an einer Außenseite der Bodenwand (42) des Gebläsegehäuses (38) angeordnet ist.

9. Verbrennungsluftgebläse einen der vorangehenden Ansprüche, **dadurch gekennzeichnet, dass** in dem Luftströmungsraum (44) wenigstens ein Kohlenwasserstoffspeicherelement (62, 64) angeordnet ist.

10. Verbrennungsluftgebläse nach Anspruch 9, **dadurch gekennzeichnet, dass** wenigstens ein Kohlenwasserstoffspeicherelement (62, 64) mit aktivkohlehaltigem Material aufgebaut ist.

11. Verbrennungsluftgebläse nach einem der vorangehenden Ansprüche, **dadurch gekennzeichnet, dass** das Gebläsegehäuse (38) mit Metallmaterial, vorzugsweise Aluminium oder einer Aluminiumlegierung, aufgebaut ist, und dass der Gehäusedeckel (70) mit Kunststoffmaterial, vorzugsweise Polyamidmaterial, aufgebaut ist.

12. Verbrennungsluftgebläse nach Anspruch 1 oder 2, **dadurch gekennzeichnet, dass** das Gebläsegehäuse (38) in einem Metall-Druckgussverfahren hergestellt ist, oder/und dass der Gehäusedeckel (70) in einem Kunststoff-Spritzgussverfahren, vorzugsweise einem MuCell^{®}-Spritzgussverfahren, hergestellt ist.

13. Brennstoffbetriebenes Fahrzeugheizgerät, umfassend einen Brennerbereich (12), eine flüssigen Brennstoff zu dem Brennerbereich (12) fördernde Brennstoffpumpe (20) sowie ein Verbrennungsluftgebläse (24) nach einem der vorangehenden Ansprüche.

14. Brennstoffbetriebenes Fahrzeugheizgerät nach Anspruch 13, sofern auf Anspruch 2 rückbezogen, **dadurch gekennzeichnet, dass** der Brennerbereich (12) an dem ersten Teil (78) der Umfangswand (40) getragen ist.

## Claims

1. Combustion air blower, in particular r side channel blower, for a fuel-operated vehicle heater, comprising a blower housing (38), wherein an air flow chamber (44) through which combustion air to be conveyed can flow is formed on the blower housing (38) and air flowing into the air flow chamber (44) via at least one inlet opening (50) flows to a conveying region (72) comprising a conveying wheel (48) rotatable about an axis of rotation (D), wherein the blower housing (38) comprises a bottom wall (42) and the conveying region (72) in the bottom wall (42) of the blower housing (38) comprises a conveying channel (46) open towards an outer side facing away from the air flow chamber (44), surrounding the axis of rotation in an annular manner and covered by the conveying wheel (48), wherein the air flow chamber (44) is open to the conveying channel (46) via at least one outlet opening (52), wherein a housing cover (70) is carried on the blower housing (38), covering the conveying wheel (48) and defining with the blower housing (38) a conveying wheel receiving space, further comprising a circumferential wall (40) surrounding the air flow chamber (44), **characterized in that** at least a part of the circumferential wall (40) is formed on the housing cover (70).

2. Combustion air blower according to claim 1, **characterized in that** a first part (78) of the circumferential wall (40) is formed on the blower housing (38) and a second part (82) of the circumferential wall (40) is formed on the housing cover (70).

3. Combustion air blower according to one of the preceding claims, **characterized in that** the circumferential wall (40) has a substantially rectangular cross-sectional geometry provided with four partial circumferential walls (84, 86, 88, 90), and **in that** one of the partial circumferential walls (84, 86, 88, 90) is provided on the blower housing (38) and three of the partial circumferential walls (84, 86, 88, 90) are provided on the housing cover (70).

4. Combustion air blower according to one of the preceding claims, **characterized in that** an air supply duct (80) leading to the air flow chamber (44) and open thereto via the at least one inlet opening (50) is provided in the first part (78) of the circumferential wall (40).

5. Combustion air blower according to one of the preceding claims, **characterized in that** the blower housing (38) has a motor housing region (54) which is surrounded at least in regions by the air flow chamber (44) and has a circumferential wall (66) and a bottom wall (68).

6. Combustion air blower according to one of the preceding claims, **characterized in that** a closing element (60) closing off the air flow chamber (44) is provided at an end region of the circumferential wall (40) facing away from the bottom wall (42) of the blower housing (38), and **in that** the closing element (60) is constructed with plastic material.

7. Combustion air blower according to one of the preceding claims, **characterized in that** a sealing element (76) is arranged between the housing cover (70) and the base wall (42) of the blower housing (38) tightly sealing the conveying wheel receiving space in the region of the adjunction of the housing cover (70) to the base wall (42).

8. Combustion air blower according to claim 7, **characterized in that** the sealing element (76) is arranged on an outer side of the base wall (42) of the blower housing (38) to surround the delivery duct (46) in a ring-like manner.

9. Combustion air blower according to one of the preceding claims, **characterized in that** at least one hydrocarbon storage element (62, 64) is arranged in the air flow chamber (44).

10. Combustion air blower according to claim 9, **characterized in that** at least one hydrocarbon storage element (62, 64) is constructed with material containing activated carbon.

11. Combustion air blower according to any of the preceding claims, **characterized in that** the blower housing (38) is constructed with metal material, preferably aluminium or an aluminium alloy, and that the housing cover (70) is constructed with plastic material, preferably polyamide material.

12. Combustion air blower according to claim 1 or 2, **characterized in that** the blower housing (38) is manufactured in a metal die casting process, or/and that the housing cover (70) is manufactured in a plastic injection moulding process, preferably a MuCell^{®} injection moulding process.

13. Fuel-operated vehicle heater, comprising a burner region (12), a fuel pump (20) conveying liquid fuel to the burner region (12), and a combustion air blower (24) according to one of the preceding claims.

14. Fuel-operated vehicle heater according to claim 13, when referred back to claim 2, **characterized in that** the burner portion (12) is supported on the first part (78) of the circumferential wall (40).

## Revendications

1. Ventilateur d'air de combustion, en particulier ventilateur à canal latéral, pour un chauffage de véhicule alimenté en carburant, comprenant un boîtier de ventilateur (38), dans lequel une chambre d'écoulement d'air (44) pouvant être traversée par l'air de combustion à transporter est formée sur le boîtier de ventilateur (38) et l'air entrant dans la chambre d'écoulement d'air (44) par au moins une ouverture d'entrée (50) s'écoule vers une zone de transport (72) comprenant une roue de transport (48) pouvant tourner autour d'un axe de rotation (D), dans lequel le boîtier de ventilateur (38) comprend une paroi de fond (42) et la région de transport (72) dans la paroi de fond (42) du boîtier de ventilateur (38) comprend un canal de transport (46) ouvert vers un côté extérieur opposé à la chambre d'écoulement d'air (44), entourant l'axe de rotation de manière annulaire et recouvert par la roue de transport (48), dans lequel la chambre d'écoulement d'air (44) est ouverte vers le canal de transport (46) par au moins une ouverture de sortie (52), dans lequel un couvercle de boîtier (70) est porté sur le boîtier de ventilateur (38), recouvrant la roue de transport (48) et définissant avec le boîtier de ventilateur (38) un espace de réception de la roue de transport, comprenant en outre une paroi circonférentielle (40) entourant la chambre d'écoulement d'air (44), **caractérisé en ce qu'**au moins une partie de la paroi circonférentielle (40) est formée sur le couvercle de boîtier (70).

2. Ventilateur d'air de combustion selon la revendication 1, **caractérisée en ce qu'**une première partie (78) de la paroi circonférentielle (40) est formée sur le boîtier de ventilateur (38) et une deuxième partie (82) de la paroi circonférentielle (40) est formée sur le couvercle de boîtier (70).

3. Ventilateur d'air de combustion selon l'une des revendications précédentes, **caractérisée en ce que** la paroi circonférentielle (40) présente une géométrie de section transversale sensiblement rectangulaire pourvue de quatre parois circonférentielles partielles (84, 86, 88, 90), et **en ce qu'**une des parois circonférentielles partielles (84, 86, 88, 90) est prévue sur le boîtier de ventilateur (38) et trois des parois circonférentielles partielles (84, 86, 88, 90) sont prévues sur le couvercle de boîtier (70).

4. Ventilateur d'air de combustion selon l'une des revendications précédentes, **caractérisée en ce qu'**un canal d'amenée d'air (80) menant à la chambre d'écoulement d'air (44) et ouvert sur celle-ci via ladite au moins une ouverture d'entrée (50) est prévu dans la première partie (78) de la paroi circonférentielle (40).

5. Ventilateur d'air de combustion selon l'une des revendications précédentes, **caractérisée en ce que** le boîtier de ventilateur (38) présente une zone de boîtier moteur (54) qui est entourée au moins par zones par la chambre d'écoulement d'air (44) et qui présente une paroi circonférentielle (66) et une paroi de fond (68).

6. Ventilateur d'air de combustion selon l'une des revendications précédentes, **caractérisée en ce qu'**un élément de fermeture (60) fermant la chambre d'écoulement d'air (44) est prévu sur une zone d'extrémité de la paroi circonférentielle (40) opposée à la paroi de fond (42) du boîtier de ventilateur (38), et **en ce que** l'élément de fermeture (60) est réalisé en matière plastique.

7. Ventilateur d'air de combustion selon l'une des revendications précédentes, **caractérisée en ce qu'**un élément d'étanchéité (76) fermant hermétiquement l'espace de réception de la roue de transport dans la zone de la jonction du couvercle de boîtier (70) avec la paroi de fond (42) est disposé entre le couvercle de boîtier (70) et la paroi de fond (42) du boîtier de ventilateur (38).

8. Ventilateur d'air de combustion selon la revendication 7, **caractérisée en ce que** l'élément d'étanchéité (76) est disposé sur un côté extérieur de la paroi de fond (42) du boîtier de ventilateur (38) pour entourer de manière annulaire le canal de transport (46).

9. Ventilateur d'air de combustion selon l'une des revendications précédentes, **caractérisée en ce qu'**au moins un élément de stockage d'hydrocarbures (62, 64) est disposé dans la chambre d'écoulement d'air (44).

10. Ventilateur d'air de combustion selon la revendication 9, **caractérisée en ce qu'**au moins un élément de stockage d'hydrocarbures (62, 64) est réalisé avec un matériau contenant du charbon actif.

11. Ventilateur d'air de combustion selon l'une quelconque des revendications précédentes, **caractérisée en ce que** le boîtier de ventilateur (38) est construit en matériau métallique, de préférence en aluminium ou en alliage d'aluminium, et **en ce que** le couvercle de boîtier (70) est construit en matériau plastique, de préférence en matériau polyamide.

12. Ventilateur d'air de combustion selon la revendication 1 ou 2, **caractérisée en ce que** le boîtier de ventilateur (38) est fabriqué dans un procédé de moulage sous pression de métal, ou/et que le couvercle de boîtier (70) est fabriqué dans un procédé de moulage par injection de plastique, de préférence un procédé de moulage par injection MuCell^{@}.

13. Appareil de chauffage de véhicule fonctionnant au carburant, comprenant une zone de brûleur (12), une pompe à carburant (20) transportant du carburant liquide vers la zone de brûleur (12), et un ventilateur d'air de combustion (24) selon l'une des revendications précédentes.

14. Appareil de chauffage de véhicule alimenté en carburant selon la revendication 13, lorsqu'on renvoie à la revendication 2, **caractérisé en ce que** la partie brûleur (12) est supportée sur la première partie (78) de la paroi circonférentielle (40).
